Europäisches Patentamt

European Patent Office

Office européen des brevets

(11) Veröffentlichungsnummer: **0 037 038**

**A1**

(12) # EUROPÄISCHE PATENTANMELDUNG

(21) Anmeldenummer: 81102116.1

(22) Anmeldetag: 20.03.81

(51) Int. Cl.³: **F 02 M 23/14**
F 02 M 31/06, F 02 M 31/08

(30) Priorität: 27.03.80 DE 3011851

(43) Veröffentlichungstag der Anmeldung:
07.10.81 Patentblatt 81/40

(84) Benannte Vertragsstaaten:
GB IT

(71) Anmelder: Greiner, Otto
Seilersgründchen 5
D-8632 Neustadt bei Coburg(DE)

(72) Erfinder: Greiner, Otto
Seilersgründchen 5
D-8632 Neustadt bei Coburg(DE)

(54) **Einsatz in die Ansaugleitung von mit Vergasern ausgestatteten Otto-Motoren zum Erreichen stärkerer Zerstäubung des Kraftstoffes und besserer Durchwirbelung des Kraftstoff-Luftgemisches.**

(57) Zwischen Vergaser (1) und Ansaugkrümmer (2) eines normalen Otto-Motors ist ein doppelwandiges Rohrstück (3/4) eingebracht mit ringförmigem Hohlraum (6) zwischen den Wänden. In diesen wird durch eine Oeffnung (6') der Außenwand (4) Luft gepreßt, die von einer durch entsprechende Aggregate von der Kurbelwelle angetriebenen und daher mit dieser proportional laufenden Pumpe (10/13) über eine Auspuffmanschette (21) bekannter Art und einem Verbindungsschlauch (19) angesaugt und durch eine Heizpatrone (8) bekannter Art weitergeleitet wird. In die Innenwand (3) des Rohrstückes sind – rundum gleichmäßig verteilt – beliebig viele düsenartige Löcher (5) von sehr geringem Durchmesser so eingefräst, daß die Innenfläche des Rohrstücks (3) glatt bleibt und das strömende Gemisch nicht durch Aufprall auf vorstehende Teile zur Kondensation gezwungen ist.

Da die unter Ueberdruck stehende, erwärmte Luft sich im Zwischenwandhohlraum (6) ungehindert ausbreiten kann, schießt sie bei allen Düsen (5) mit gleicher Intensität ein, so daß durch deren Sprühwirkung und das Wärmegefälle zum Gemisch eine stärkste Vernebelung des Kraftstoffes und Durchwirbelung des Gemisches entsteht.

./...

Fig. 1

Fig. 4
C - D

Einsatz in die Ansaugleitung von mit Vergasern ausgestatteten Otto-Motoren zum Erreichen stärkerer Zerstäubung des Kraftstoffes und besserer Durchwirbelung des Kraftstoff-Luftgemisches.

Sparsamer Kraftstoffverbrauch bei mit Vergasern versehenen Otto-Motoren und bei Diesel-Motoren hängt davon ab, daß der Kraftstoff im Kraftstoff-Luftgemisch sowohl stark vernebelt als auch das Gemisch zur Erreichung größtmöglicher Homogenität kräftig durchwirbelt wird.

Letztere Forderung wird bei Vergaser-Motoren durch das mehrfache Umlenken des Gemisches in höherem Maße erfüllt, während sein mehrfaches Aufprallen an den Metallwänden kondensierend auf den Kraftstoff wirkt und dessen Vernebelung vermindert.

Der höhere Wirkungsgrad der Diesel-Motoren wird dadurch erreicht, daß die unter starkem Druck erfolgende Einspritzung des Kraftstoffes direkt in den Verbrennungsraum eine sehr starke Vernebelung bewirkt, obwohl eine Homogenität des Gemisches bei dem enorm kurzfristigen Ablauf der Vorgänge mangels genügender Durchwirbelung nicht gegeben ist.

Die Erfindung soll beide Nachteile beheben; es wird sowohl größtmögliche Vernebelung als auch stärkste Durchwirbelung erreicht.

Zwei Ausführungsbeispiele der Erfindung sind auf zwei Blatt Zeichnungen dargestellt und werden im folgenden näher beschrieben.

Es zeigen:

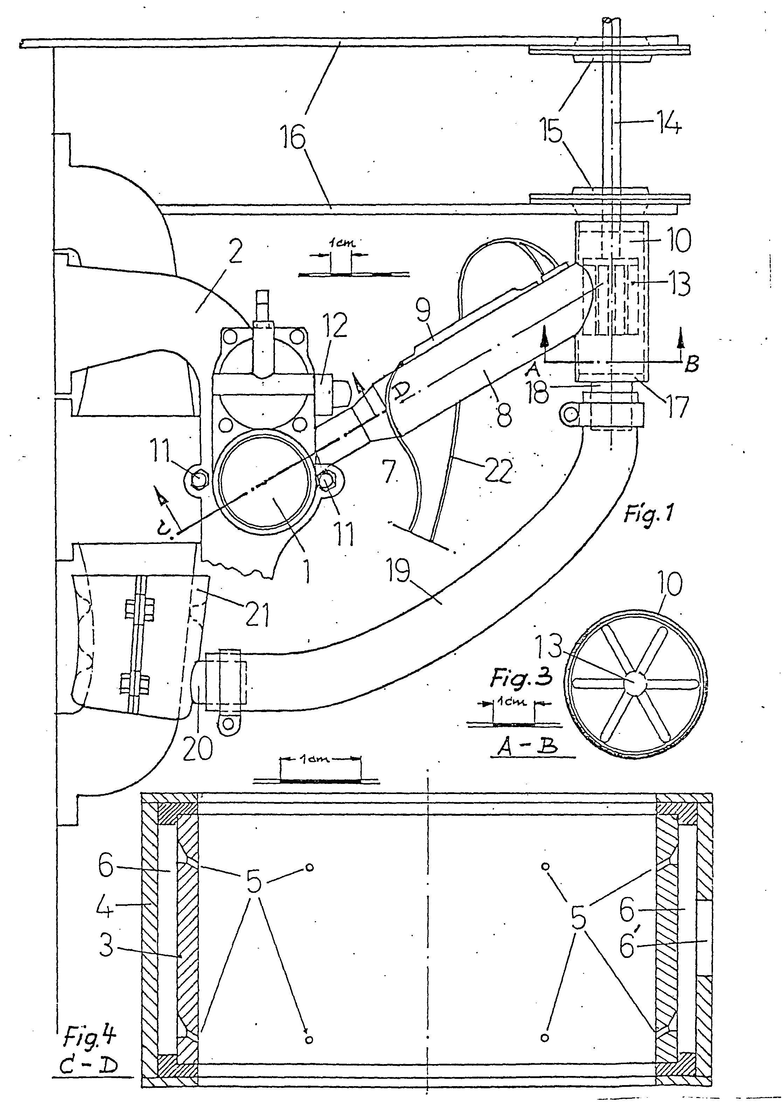

Fig. 1 eine Draufsicht auf eine vorhandene Vergaser- und Auspuffanlage eines Mittelklasse-Wagens mit den erfindungsgemäß eingefügten neuen Konstruktionselementen.
Fig. 2 eine Seitenansicht in Richtung Zylinderblock dieser Anlage. Dabei sind bei beiden Darstellungen alle Einzelheiten weggelassen bzw. nur schematisch gezeigt, die nicht in unmittelbarem Zusammenhang mit den Zusatz-Einrichtungen der Neukonstruktion stehen.
Fig. 3 einen Schnitt A-B durch das Gehäuse einer Zentrifugalpumpe.
Fig. 4 einen Schnitt C-D durch den wichtigsten Teil der

2 -

Neukonstruktion, den doppelwandigen, röhrenförmigen Einsatz in die Gemischansaugleitung.

Fig. 5 eine abweichende Konstruktion dieses Einsatzes, die im Falle einer Neugestaltung der gesamten Ansauganlage zweckmäßiger zu verwenden ist.

Die Einzelteile der Neukonstruktion:

Zwischen dem Vergaser 1 und dem Ansaugkrümmer 2 ist mit entsprechenden Abdichtungen eine doppelwandiges Rohrstück 3/4 eingebaut, dessen Innenrohr 3 den gleichen Innendurchmesser wie der Durchlaß des Vergasers hat, und bei dem in ein- oder mehrfachen kranzartigen Anordnungen relativ kleine, düsenartige Bohrungen 5 sind. In einer Öffnung des Außenrohres 4, welches um einige Milimeter weiter ist, so daß ein Hohlraum 6 zwischen beiden Rohren entsteht, führt das verjüngte Ende 7 einer mit einem Heizkreuz bekannter Bauart versehenen Heizpatrone 8, deren anderes Ende in einem notwendigen Winkel mit dem Gehäuse 10 einer Zentrifugal-Pumpe normaler Konstruktion verbunden ist.

Eine - wie üblich - rechtwinklige Verbindung der beiden ist bei dem dargestellten Anwendungsbeispiel nicht möglich, da es zum Einbau in vorhandene Mittelklasse-Wagen vorgesehen ist und die beiden Stehbolzen 11, welche die Vergaserteile auf dem Ansaugkrümmer 2 halten, senkrecht zur Zylinderblock-Wand angeordnet sind. Die Heizpatrone 8 muß also zwischen einem der Stehbolzen 11 und der Beschleuniger-Pumpe 12 durchgeführt werden; daher auch die Verjüngung 7.

Der Flügelkopf 12 der Zentrifugalpumpe befindet sich am Ende einer Welle 14, die parallel zum Motorblock laufend, in zwei Kugellager 15 tragenden, am Motorblock befestigten Stützen 16 gelagert ist und an ihrem anderen Ende eine Keilriemen-Scheibe aufnimmt, welche von einem Riemen angetrieben wird, der in bekannter Art an der Stirnseite des Motors auch die Lichtmaschine und den Kühlerventilator betätigt.

Das dem Eintritt der Welle 14 gegenüberliegende Ende des Pumpengehäuses 10 ist durch einen Deckel 17 abgeschlossen, der einen engeren Stutzen 18 trägt, an dem ein Schlauch 19 angeschlossen ist, der zu einem Gegenstutzen 20 an einer Auspuff-Manschette bekannter Art 21 führt. In einem oder auch in beiden Stutzen sind Luftfilter untergebracht.

Über die erste Schaltstellung des Zündschlosses am Armaturenbrett erfolgt die Stromzuführung 22 zur Heizpatrone 8, auf deren Gehäuse der Wärmefühler 9 eines Thermostates angebracht ist.

Die Wirkungsweise der Konstruktion:

Wenige Minuten nachdem das Zündschloß zur ersten Stufe geschaltet wurde, ist die Heizpatrone 8 so weit erwärmt, daß ein kalter Motor wie üblich gestartet werden kann. Dabei fördert die Zentrifugalpumpe 10/13 durch die Auspuffmanschette 21 und die in die Stutzen 20/18 eingebrachten Filter Außenluft in die Heizpatrone. Von da kommt sie - mehrfach erhitzt und mit Überdruck - in den Hohlraum 6 des doppelwandigen Rohrstückes 3/4, in dem sie sich ungehindert ausbreiten kann, so daß sie durch alle der kranzartig angeordneten Düsen 5 mit der gleichen Intensität in das strömende Gemisch einschießt.

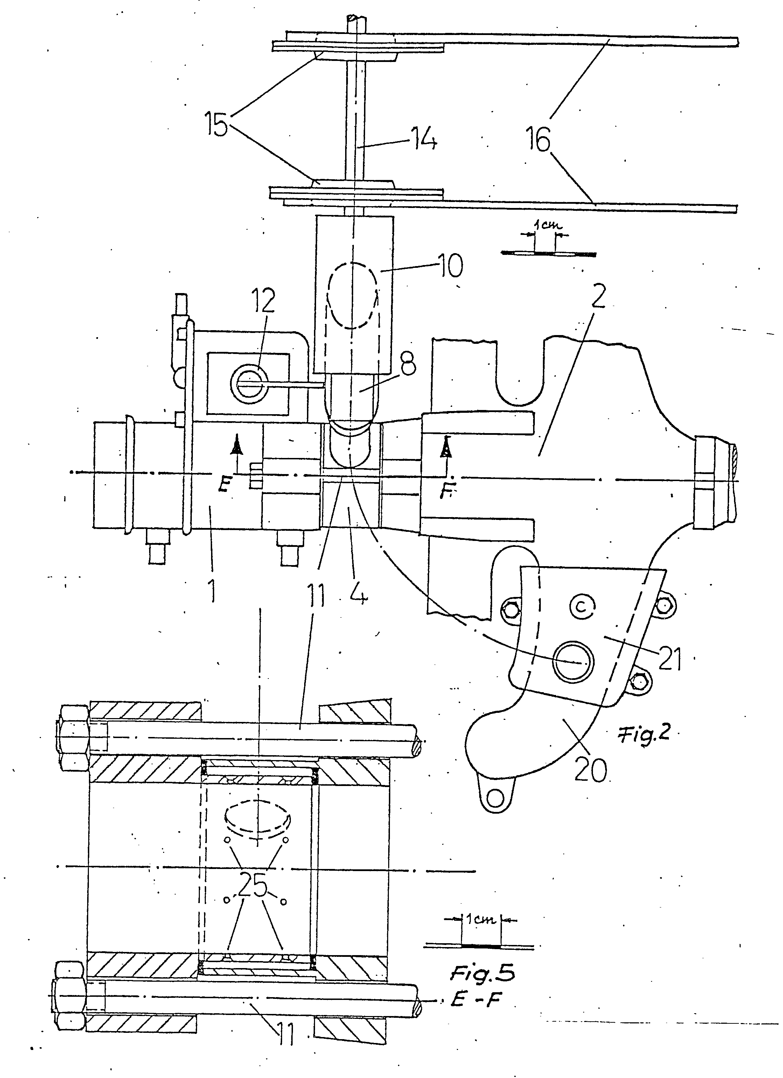

Dieses Einschießen unter Druck bewirkt eine starke Durchwirbelung des Gemisches. Sie kann dadurch variiert werden, daß die Düsen des Innenrohres 25 (Fig. 5) senkrecht zur Wandung verlaufen, oder daß sie (5, Fig. 4) mehr oder weniger in die Strömungsrichtung des Gemisches geneigt sind.

Besonders wichtig ist es, daß die einschießende Luft höhere Temperatur hat als das Gemisch, da sonst statt einer Vernebelung eine Kondensation erfolgen würde.

Eine den jeweiligen Fahrverhältnissen angepaßte Temperatur

- 4 -

wird durch folgendes erreicht:

Bei dem vorgesehenen Antrieb der Zentrifugal-Pumpe bleibt ihre Drehzahl immer der der Kurbelwelle proportional. Bei schnellerem Motor und stärkerem Durchfluß des Gemisches wird daher an den Düsen entsprechend mehr Zusatzluft eingeschossen, die zudem beim Passieren der Auspuff-Manschette stärker erhitzt ist, da sich die Auspuff-Temperatur bei größer werdender Motorleistung ebenso erhöht.

Eine besondere, regulierende Wirkung hat die Heizpatrone. Sie muß beim Starten des kalten Motors wenige Minuten vorher eingeschaltet werden, um zunächst die notwendige Temperatur allein zu erbringen. Wenn die aus der Auspuff-Manschette kommende Wärme für den funktionsgerechten Ablauf der Vorgänge genügt, schaltet der Thermostat mit seinem auf der Außenwand der Heizpatrone 8 sich befindenden Wärmefühler 9 ab. Das Wechselspiel kann sich im Verlauf einer Fahrt nach Notwendigkeit wiederholen.

Bei Zwischenaufenthalten ist es gleichgültig, ob die Handschaltung der Heizpatrone auf "ein" oder "aus" steht, da der Thermostat die Temperatur nach oben begrenzt und - wenn notwendig - ab- oder einschaltet.

Die Abweichung des zweiten Ausführungsbeispiels liegt in der Konstruktion des in die Ansaugleitung eingebrachten Rohrstückes. Während beim ersten Anwendungsbeispiel Außen- und Innenrohr beide zugleich oben und unten durch einen flachen Ring mit entsprechenden Dichtungen abgedeckt werden, ist beim zweiten Anwendungsbeispiel das Außenrohr mit dem sich darunter befindlichen Teil des Vergaseraufbaues fest verbunden und oben mit einem elastischen Ring abgedichtet, das Innenrohr dagegen mit dem Teil darüber bei unten befindlichem Dichtungsring.

Patentanspruch

Als neu wird beansprucht:

Zusatzeinrichtung an dem Vergaser eines Otto-Motors, dadurch gekennzeichnet, daß in das Kraftstoff-Luftgemisch auf seinem Weg vom Vergaser zu den Zylindern quer zur Strömungsrichtung aus mehreren Düsen Luft eingeschossen wird, die höhere Temperatur hat als das Gemisch.

Fig. 1

Fig. 3

A - B

Fig. 4
C - D

Fig.2

Fig.5
E - F

**0037038**

<table>
<tr><td>Europäisches Patentamt</td><td>EUROPÄISCHER RECHERCHENBERICHT</td><td>Nummer der Anmeldung<br>EP 81 10 2116.1</td></tr>
</table>

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - E - 83 177 (M.Y.A.M. SERRUYS)<br>*Anspruch 1, Seite 1, Spalte 2, Absatz 1;<br>Seite 2, Spalte 2, Absatz 2;<br>Fig. 1, 5 *<br>&  DE - C - 1 476 248<br><br>-- | 1 |
| | US - A - 2 354 179 (W.V. BLANC)<br>* Anspruch 1, Seite 1, Spalte 1,<br>Zeilen 1 bis 16; Seite 2, Spalte 1,<br>Zeilen 8 bis 24; Seite 3, Spalte 2,<br>Zeilen 28 bis 39; Fig. 1, 4 *<br><br>-- | 1 |
| | Patents Abstracts of Japan<br>Band 2, Nr. 74, 10. Juni 1978<br>Seite 1803M78<br>&  JP - A - 53 - 41631<br><br>----- | 1 |

**KLASSIFIKATION DER ANMELDUNG (Int. Cl.³)**

F 02 M   23/14
F 02 M   31/06
F 02 M   31/08

**RECHERCHIERTE SACHGEBIETE (Int. Cl.³)**

F 02 M   15/00
F 02 M   23/14
F 02 M   31/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 22-06-1981 | CANNICI |

EPA form 1503.1  08.78